# EUROPEAN PATENT SPECIFICATION

(11) **EP 2 245 693 B1**
(45) Date of publication and mention of the grant of the patent: **12.10.2011**
(21) Application number: 09714354.9
(22) Date of filing: 27.02.2009
(51) Int. Cl.: H01M 8/22

(54) **DEVICE AND METHOD FOR PERFORMING A REVERSE ELECTRODIALYSIS PROCESS**
VORRICHTUNG UND VERFAHREN ZUR DURCHFÜHRUNG EINES UMGEKEHRTEN ELEKTRODIALYSEVERFAHRENS
DISPOSITIF ET PROCÉDÉ D'EXÉCUTION D'UN PROCÉDÉ D'ÉLECTRODIALYSE INVERSE

(30) Priority: 27.02.2008 NL 1035090
(43) Date of publication of application: 03.11.2010
(73) Proprietor: Redstack B.V., 8606 JR Sneek (NL)
(72) Inventor: ROODENBURG, Patrick, NL-2612 EH Delft (NL)
(74) Representative: Verdijck, Gerardus
(86) International application number: PCT/NL2009/000048
(87) International publication number: WO 2009/108044

(56) References cited:
- US-A1- 2006 263 646
- POST ET AL: "Salinity-gradient power: Evaluation of pressure-retarded osmosis and reverse electrodialysis" JOURNAL OF MEMBRANE SCIENCE, ELSEVIER SCIENTIFIC PUBL.COMPANY. AMSTERDAM, NL, vol. 288, no. 1-2, 3 February 2007 (2007-02-03), pages 218-230, XP005872394 ISSN: 0376-7388
- TUREK ET AL: "Renewable energy by reverse electrodialysis" DESALINATION, ELSEVIER, AMSTERDAM, NL, vol. 205, no. 1-3, 31 January 2007 (2007-01-31), pages 67-74, XP005868712 ISSN: 0011-9164
- LACEY R E: "Energy by reverse electrodialysis" OCEAN ENGINEERING, ELMSFORD, NY, US, vol. 7, 1 January 1980 (1980-01-01), pages 1-47, XP002437777 ISSN: 0029-8018

## Description

The present invention relates to a device for performing electrochemical processes in an electrochemical cell, such as a reverse electrodialysis process. The invention relates particularly to the cleaning of electrodes herein.

Using a reverse electrodialysis process electrical energy can be generated by making use of electric potential that is available by bringing together for instance seawater and river water or similar flows. A device for performing such a reverse electrodialysis process is described in NL 1031148. During the electrolysis of aqueous electrolyte containing calcium and/or magnesium, limescale forms on the cathode in such a device in accordance with the following chemical reactions:

2 H₂O + 2 e⁻ -> H₂ + 2 OH⁻ (1);

Mg²⁺ + 2 OH⁻ -> Mg(OH)₂ (s) (2);

CO₂ + OH⁻ -> HCO₃⁻ (3);

HCO₃⁻ + OH⁻ -> CO₃2⁻ + H₂O (4); and

Ca²⁺ + CO₃²⁻ -> CaCO₃ (s) (5).

The formed limescale impedes proper operation of the electrochemical cell and must therefore be removed. The efficiency of the cell deteriorates due to the formation of limescale. This means that, in order to keep the efficiency of the cell at a desired level, the cathode must be cleaned regularly, wherein the limescale is removed. By placing the cathode in a relatively acidic solution the limescale on the cathode surface dissolves and this surface becomes clean again. Known methods of placing the cathode in such an environment are to flush the cathode with hydrochloric acid and to change the flow direction. Although the first method of flushing the cathode is applied in electrodialysis, this method is not readily usable in reverse electrodialysis. This means that in such a reverse electrodialysis process the flow direction in the system must be reversed with some regularity. After reversal of the flow direction the following reaction occurs on the surface on which the limescale is present:

2 H₂O -> O₂ + 4 H⁺ + 4 e⁻ (6).

By reversing the flow direction the function of the cathode changes, this such that after the reversal of the flow direction it in fact functions as an anode. The pH on the electrode surface is reduced by the production of protons on the anode surface during the period of reversed flow direction. The limescale present on the surface hereby dissolves. A drawback of this method of cleaning of the electrode is the enormous reduction in the lifespan of such electrodes. It has thus been found in practice that, depending on among other factors the speed at which the flow direction is reversed (the reversal of polarity) and the cover layer/coating with which the electrode is provided, the lifespan can be reduced by a factor of 1000 or more. Although determined cover layers reduce this drawback to some extent, such electrodes still display a reduction in lifespan of for instance about 96%. This enormous reduction in lifespan of the electrodes when the flow direction is reversed is caused because the oxidation state of the cover layer reverses and due to the reactions which occur herein. A cathode which is switched, and in fact begins to function as an anode, is in the first instance more heavily impacted by the reactions which occur.

The reactions which occur in the reverse electrodialysis process are, among others:
anode reactions:

   2 H₂O -> O₂ + 4 H⁺ + 4 e⁻ (7) ;

   2 Cl⁻ -> Cl₂ + 2 e⁻ (8) ; and
cathode reaction:

   2 H₂O + 2 e⁻ -> H₂ + 2 OH⁻ (9).

Other reactions can also occur here, for instance Mn⁺ + n e⁻ --> M as cathode reaction.

US 2006/263646 A1 discloses a system for energy generation.

The present invention has for its object to provide a device with which existing devices are improved and with which, due particularly to the improved cleaning of the electrodes, a longer lifespan thereof can be achieved.

This object is achieved with the device according to the invention for performing a reverse electrodialysis process, comprising:
- a first compartment provided with at least a first and a second electrode;
- a second compartment separated from the first compartment and provided with at least a first and a second electrode;
- a switching element for switching between a first mode, in which the first electrode of the first compartment and the first electrode of the second compartment are mutually connected and in which the second electrodes in the compartments are separated, and a second mode in which the second electrode of the first compartment and the second electrode of the second compartment are mutually connected and the first electrodes in the compartments are separated; and
- at least one cation exchange membrane and anion exchange membrane, which are placed alternately between the first and second compartment, wherein between the cation and anion exchange membranes are formed electrolyte compartments, in which there are a low-osmotic electrolyte solution with low ion concentrations and a high-osmotic electrolyte solution with ion concentrations higher than the low-osmotic electrolyte solutions, which high-osmotic and low-osmotic electrolyte solutions are placed alternately in the electrolyte compartments, and wherein the high and low-osmotic electrolyte solutions change position during the switch from the first to the second electricity-generating mode.

Both sides of a cell, i.e. a first (anode) compartment and a second (cathode) compartment, as used in a first mode, are each provided with at least a first and a second electrode. In the case where the device is used in a reverse electrodialysis process electricity is generated in the first and second modes. By providing a first (anode) electrode and a second (cathode) electrode in a first compartment, and also providing a first (cathode) electrode and a second (anode) electrode in the second compartment, it is possible to switch, i.e. reverse polarity, between the electrode pair in use. During the first mode of the cell the first electrode pair is thus active, i.e. the anode in the first (anode) compartment and the cathode in the second (cathode) compartment are mutually connected. The second electrode pair is then mutually separated. After switching of the flow direction in the second mode, the first electrode pair is disconnected and is therefore no longer active. The second electrode pair, i.e. the second (cathode) electrode in the first compartment and the second (anode) electrode in the second compartment, is then connected. In this second mode the first compartment functions as cathode compartment and the second compartment as anode compartment. In the second mode the flow direction between the two compartments is therefore reversed relative to the first mode. Switching of the electrodes takes place using a switching element.

In addition to switching of the electrode pairs between the two modes, the electrolyte solution with magnesium and/or calcium therein is also switched. This means that, in the case fresh water flows for instance along the first (anode) electrode in the first compartment in the first mode, mainly oxygen will be formed as according to for instance reaction (6), and to some extent possibly chlorine as according to reaction (8). This chlorine is formed from chloride which has come from the adjacent electrolyte compartment through an anion-permeable membrane. In the second mode hydrogen is produced in the first compartment as according to reaction (1).

In an alternative preferred embodiment salt water is sent through the first compartment in the first mode instead of fresh water. Chlorine and oxygen are herein then formed. In this case a cation-permeable membrane must be provided in this compartment. In the second mode hydrogen is in this case formed in the first compartment. A distinction between the two embodiments according to the present invention lies in the question of whether it is desirable to form chlorine at the anode. Another distinction lies in the Ca and Mg concentrations. By using the electrolyte with the lowest concentration of limescale-forming ions as catholyte, the amount of limescale deposited on the electrode will be limited. This reduces inter alia the frequency of the polarity reversal.

The alternately placed cation and anion exchange membranes separate the first compartment from the second. Electrolyte compartments are in fact formed between these membranes and have alternately a high or low-osmotic electrolyte solution therein. When switching from the first to the second mode and vice versa, the positions, or flows, of high-osmotic and low-osmotic electrolyte solutions are also switched. In the case that seawater and river water are used, these flows must therefore be mutually reversed during the switching in order to thereby reverse the electric current direction.

In the second mode a relatively lower pH results in the second compartment due to the reaction at the anode. As a result of this lower pH in this compartment the limescale deposited on the first (cathode) electrode in this compartment is removed. This means that the limescale is dissolved from this cathode which is not carrying current. In the first mode it is precisely the second (cathode) electrode of the first compartment which is cleaned. The problem of cleaning particularly the electrodes in the device, and in particular the cathodes therein, is hereby solved by introducing more electrode material into the device. This is precisely the opposite of the efforts usually made in practice to reduce the amount of electrode material in such a device so as to thereby reduce, among others, the aspect of cost. The load on each electrode individually is considerably reduced by the present invention. The lifespan of the electrodes is greatly increased by this reduction in the load. In further preferred embodiments the number of first and/or second compartments and/or first and/or second electrodes per compartment is increased. The efficiency of the electricity generation can hereby be further increased.

Switching from the first mode to the second mode can be performed in various ways. It is thus possible for instance to manually disconnect an electrode pair and couple another electrode pair during a switching moment. Use is however preferably made of a switching element, optionally consisting of a plurality of compartments, for the purpose of switching between the current-carrying electrode pairs that are in use. This switching element can be activated automatically, for instance as a function of the period of time that has elapsed in the first electricity-generating mode, or as a result of a measurement of the amount of limescale deposited on the cathode, or can be operated manually by a user. A time period between two switching moments which experiments have shown to be usable lies between 1 hour and 1 week, preferably between 12 hours and 3 days, and most preferably the period of time amounts to about 1 day.

In a preferred embodiment according to the present invention the anode and/or cathodes comprise titanium electrodes.

Through the use of a plurality of electrode pairs which carry current depending on the mode of the cell, it is possible to use titanium electrodes with a considerably improved lifespan, for instance of about 10 years. Owing to this increased lifespan it is possible to utilize such electrodes in realistic applications, whereby the feasibility of electricity generation using the reverse electrodialysis process will increase. The anode preferably comprises a cover layer of tantalum/iridium or ruthenium/iridium or platinum or platinum/iridium. The cathode preferably comprises a cover layer of ruthenium/iridium or platinum.

The invention further relates to a method for generating electricity with a reverse electrodialysis process, comprising the steps of:
- providing a device according to one or more of the claims 1-7;
- switching the device from a first electricity-generating mode to a second electricity-generating mode;
- generating electricity; and
- switching the device back from the second electricity-generating mode to the first electricity-generating mode using the switching element.

By switching the device from a first electricity-generating mode to a second electricity-generating mode a second electrode pair is activated instead of the first electrode pair. This provides the same effects and advantages as stated in respect of the device. The cleaning of the non-connected cathode is preferably performed by realizing a pH in the immediate vicinity of this cathode of less than 7 and preferably less than 3. This can be realized by the reactions occurring at the anode in the compartment where the associated cathode is present. This pH can optionally also be realized using other measures, such as for instance the addition of substances for the purpose of realizing an acidic environment. A time period between two successive switching moments is preferably applied of between 1 and 168 hours, and more preferably between 12 and 72 hours. Most preferable is a time period of about 24 hours.

In an advantageous preferred embodiment according to the present invention a lower flow speed of the electrolyte is realized for a time after the switching in order to cause a more rapid decrease in the pH in the electrolyte compartment with the connected electrode in the form of an anode.

Depending on among other factors the dimensions of the installation and the applied process conditions, a lower speed of the anolyte is realized for a time, in the order of minutes to several hours. A more rapid decrease in the pH is hereby realized. This has the result that limescale deposited on the cathode not in use in this compartment is removed more quickly. The time duration of the lower speed applied is preferably several minutes in order to protect the electrode and not limit its lifespan.

In a further advantageous embodiment according to the present invention a higher flow speed of the electrolyte is realized for a time after the switching by preventing a rise in the pH in the electrolyte compartment with the connected electrode in the form of a cathode.

By realizing a higher speed for a time, after the switching, of the catholyte close to the cathode being used the pH in this compartment will increase less. This results in a limitation of the limescale deposition on the electrode. The duration of the higher speed can be the same as the duration of the lower speed in the other compartment. It is however also possible to keep this speed constantly higher during this mode.

Further advantages, features and details are elucidated on the basis of the preferred embodiments thereof, wherein reference is made to the accompanying drawings, in which:
- figure 1 shows a schematic outline of a reverse electrodialysis process according to the prior art;
- figure 2 shows a schematic outline of a reverse electrodialysis process according to the present invention in a first mode; and
- figure 3 shows the outline of figure 2 in a second mode.

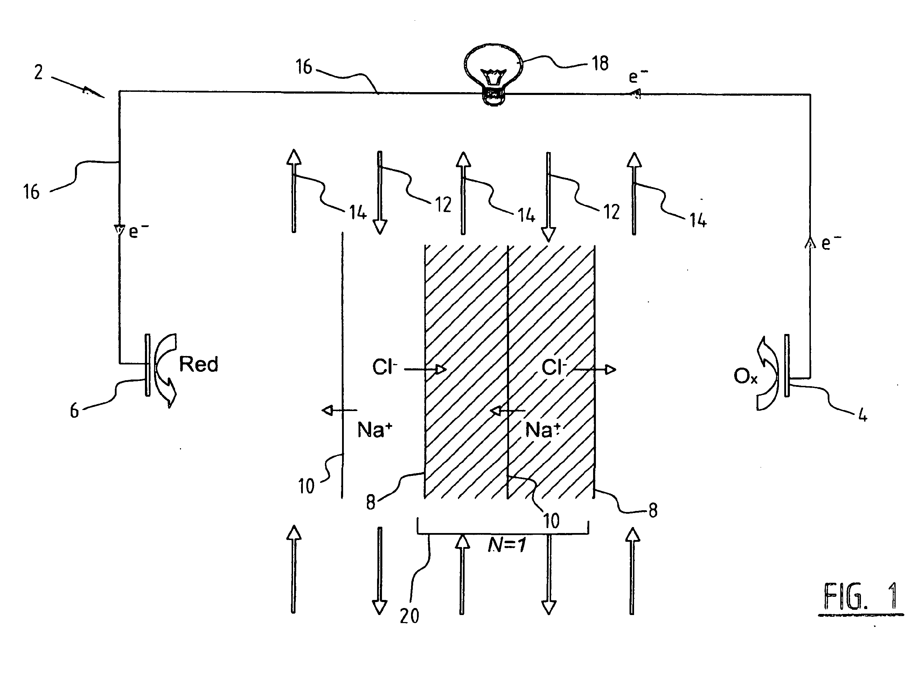

In a reverse electrodialysis process 2 (as shown schematically in figure 1) a number of anion exchange membranes 8 and cation exchange membranes 10 are placed between anode 4 and cathode 6. Electrolyte compartments are formed between anion exchange membranes 8 and cation exchange membranes 10, wherein a flow of seawater 12 and river water 14 flow alternately through adjacent compartments. Owing to the differences in concentration of ions in the flow of seawater 12 and river water 14, the ions in seawater 12 will want to move to river water 14 in order to equalize the concentrations. For the sake of convenience only sodium and chloride ions are shown as positive and negative ions in figure 1.

Since anion exchange membranes 8 only allow passage of anions and cation exchange membranes 10 only allow passage of cations, the transport of anions and cations will take place in opposite directions. The anions (Cl⁻) here move in the direction of anode 4 and the cations (Na⁺) move in the direction of cathode 6. In order to maintain electric neutrality an oxidation reaction takes place in the compartment in which anode 4 is placed and a reduction reaction takes place in the compartment in which cathode 6 is placed. An electron flow is hereby generated in electric circuit 16 to which anode 4 and cathode 6 are connected. In this electric circuit 16 electric work can be performed by an electrical apparatus 18, designated symbolically here by means of a light-bulb.

Shown with hatching in figure 1 is a dialytic cell 20 which consists of a membrane pair of an anion exchange membrane 8 and cation exchange membrane 10 and a mass of a solution with a high ion concentration, for instance seawater, and a solution with a low ion concentration, for instance river water. The number (N) of dialytic cells 20 can be increased in order to increase the potential difference between anode 4 and cathode 6.

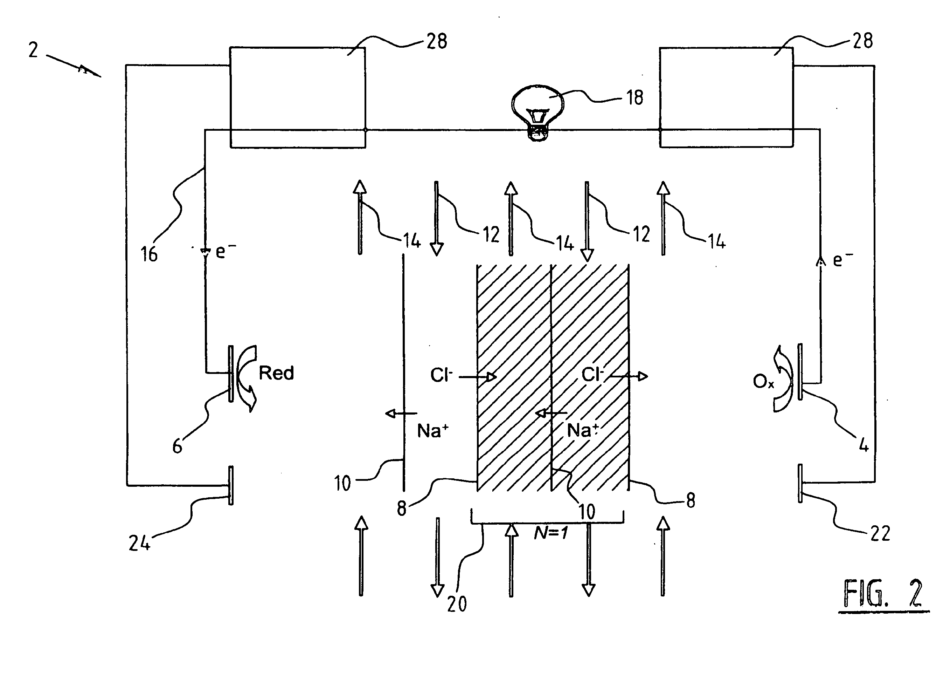

A reverse electrodialysis process taking place in a device according to the present invention (figure 2, in which corresponding elements/components as shown in figure 1 are shown with the same reference numeral) comprises an extra second electrode pair in addition to the first electricity-generating electrode pair. This second electrode pair consists of an extra cathode 22 placed in the vicinity of anode 4 and an extra anode 24 placed in the vicinity of cathode 6. The two electrodes 22, 24 of the second electrode pair are connected using a circuit 26. Incorporated in circuits 16, 26 is a switch 28 with which an electrode pair can be coupled or uncoupled. In the electricity-generating mode of cell 2 switch 28 will in a first mode couple the electrode pair 4, 6 for the purpose of generating electricity and uncouple the second electrode pair 22, 24. In a second mode the switch will uncouple the first electrode pair 4, 6 and couple the second electrode pair 22, 24.

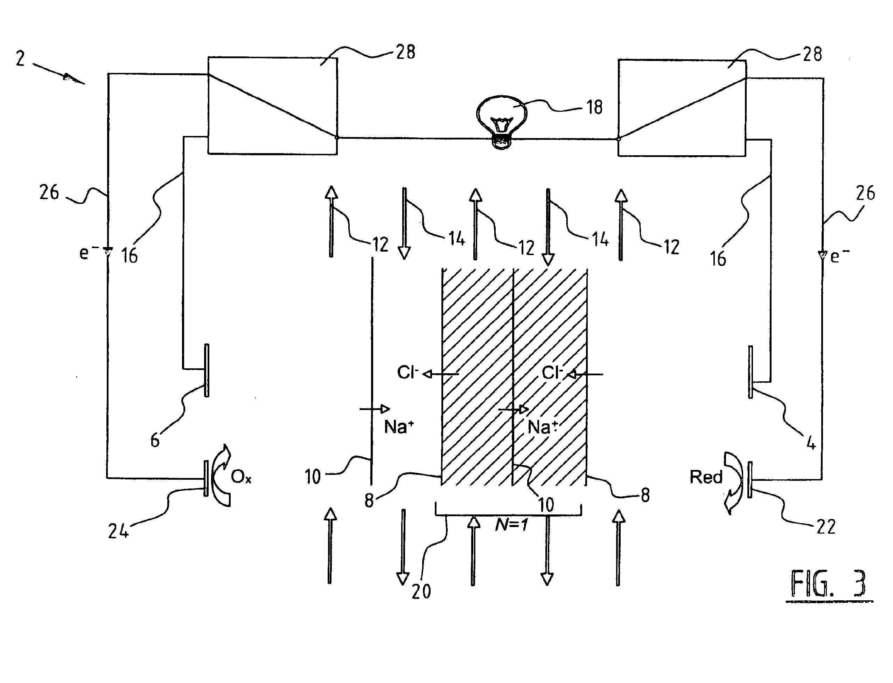

A second mode is shown in figure 3. Load 18 is here connected to the second electrode pair 24, 26 via switch components 28. The other electrode pair 4, 6 is uncoupled. In this mode the positions of the flows of seawater and river water are switched. The reversal of the electric current direction is hereby realized, since the anions and cations will want to move in the other direction.

The reactions which occur at the anode are in particular reactions (7) and (8). The relative ratio is determined here by the presence of salt or fresh water in this compartment. This is determined by the type of membrane 8, 10 of this compartment. In the case of an anion membrane 8 freshwater 14 is provided for the connected anode 4 (right-hand anode 4 in figure 2). If a cation membrane 10 lies closest, salt water 12 is provided for the connected anode (left-hand anode 34 in figure 3). The distinction lies here, among others, in the amount of chlorine formed.

### Experiment

In an experiment the configuration as shown in figure 2 is subjected to operational conditions. Use is made here of platinum-coated titanium anodes and uncoated titanium cathodes, wherein the direction of the flow is reversed daily. This means that switching of the electricity-generating electrodes takes place daily.

In the first phase of the experiment a possible decrease in the platinum layer thickness was looked for over a period of 3 months, at a current density of 600 A/m². This decrease was found to be negligible.

After this first phase, the current density was increased to 4000 A/m².

The present invention is by no means limited to the above described preferred embodiments. The rights sought are defined by the following claims, within the scope of which many modifications can be envisaged. It is thus a possible option for instance to apply a double electrode pair during an electrodialysis process for the purpose, among others, of desalination. The invention can also be applied in other electrochemical cells, for instance for water disinfection purposes. Such processes can hereby also be operated more efficiently.

## Claims

1. Device for performing electrochemical processes, such as in a reverse electrodialysis process, comprising:
- a first compartment provided with a first electrode (4) ;
- a second compartment separated from the first compartment and provided with a first electrode (6);
- at least one cation exchange membrane (10) and anion exchange membrane (8), which are placed alternately between the first and second compartment, wherein between the cation and anion exchange membranes are formed electrolyte compartments in which there are a low-osmotic electrolyte solution with low ion concentrations and a high-osmotic electrolyte solution with ion concentrations higher than the low-osmotic electrolyte solutions, which high-osmotic and low-osmotic electrolyte solutions are placed alternately in the electrolyte compartments,
**characterized in that**:
- the first and second compartments are provided with at least a second electrode (22, 24); and
- a switching element (28) for switching between a first mode, in which the first electrode of the first compartment and the first electrode of the second compartment are mutually connected and in which the second electrodes in the compartments are separated, and a second mode in which the second electrode of the first compartment and the second electrode of the second compartment are mutually connected and the first electrodes in the compartments are separated, and wherein the high and low-osmotic electrolyte solutions change position during the switch from the first to the second electricity-generating mode.

2. Device as claimed in claim 1, wherein a plurality of first and/or second compartments are provided.

3. Device as claimed in claim 1 or 2, wherein a plurality of first and/or second electrodes are provided in at least some of the compartments.

4. Device as claimed in claim 1, 2 or 3, wherein the electrodes comprise titanium electrodes.

5. Device as claimed in claim 4, wherein at least some of the electrodes comprise a cover layer of tantalum/iridium or ruthenium/iridium or platinum or platinum/iridium.

6. Device as claimed in claim 4 or 5, wherein at least some of the electrodes comprise a cover layer of ruthenium/iridium or platinum.

7. Method for generating electricity with a reverse electrodialysis process (2), comprising the steps of:
- providing a device according to one or more of the claims 1-7;
- switching the device from a first electricity-generating mode to a second electricity-generating mode;
- generating electricity; and
- switching the device back from the second electricity-generating mode to the first electricity-generating mode using the switching element.

8. Method as claimed in claim 7, wherein the cleaning of the electrode in the form of a cathode not connected in the relevant mode is performed by realizing a pH in the immediate vicinity of the cathode of less than 7 and preferably less than 3.

9. Method as claimed in claim 7 or 8, wherein a lower flow speed of the electrolyte is realized for a time after the switching in order to cause a more rapid decrease in the pH in the electrolyte compartment with the connected electrode in the form of an anode.

10. Method as claimed in claim 7, 8 or 9, wherein a higher speed of the electrolyte is realized for a time after the switching by preventing a rise in the pH in the electrolyte compartment with the connected electrode in the form of a cathode.

11. Method as claimed in one or more of the claim 7-10, wherein a time period between two successive switching moments is applied of between 1 and 168 hours, preferably between 12 and 72 hours, and most preferably of about 24 hours.

## Patentansprüche

1. Vorrichtung zum Ausführen elektrochemischer Prozesse, wie etwa in einem umgekehrten Elektrodialyseprozess, Folgendes umfassend:
- eine erste Kammer, die mit einer ersten Elektrode (4) ausgestattet ist;
- eine zweite Kammer, die getrennt von der ersten Kammer ist und die mit einer ersten Elektrode (6) ausgestattet ist;
- wenigstens eine Kationen-Austauschmembran (10) und Anionen-Austauschmembran (8), die abwechselnd zwischen der ersten und zweiten Kammer angeordnet sind, wobei zwischen den Kationen- und Anionen-Austauschmembranen Elektrolytkammern ausgebildet sind, in denen sich eine schwach osmotische Elektrolytlösung mit niedrigen Ionenkonzentrationen und eine stark osmotische Elektrolytlösung mit Ionenkonzentrationen, die höher sind als bei den schwach osmotischen Elektrolytlösungen, befinden, wobei die stark osmotischen und die schwach osmotischen Elektrolytlösungen abwechselnd in den Elektrolytkammern angeordnet sind,
**dadurch gekennzeichnet, dass**
- die erste und zweite Kammer mit wenigstens einer zweiten Elektrode (22, 24) ausgestattet sind; und
- ein Umschaltelement (28) zum Umschalten zwischen einem ersten Modus, in dem die erste Elektrode der ersten Kammer und die erste Elektrode der zweiten Kammer miteinander verbunden sind und in dem die zweiten Elektroden in den Kammern getrennt sind, und einem zweiten Modus, in dem die zweite Elektrode der ersten Kammer und die zweite Elektrode der zweiten Kammer miteinander verbunden sind und die ersten Elektroden in den Kammern getrennt sind, und wobei die stark osmotischen und die schwach osmotischen Elektrolytlösungen während der Umschaltung vom ersten zum zweiten elektrizitätserzeugenden Modus die Position wechseln.

2. Vorrichtung nach Anspruch 1, wobei mehrere von den ersten und/oder zweiten Kammern vorhanden sind.

3. Vorrichtung nach Anspruch 1 oder 2, wobei mehrere erste und/oder zweite Elektroden in wenigstens einigen der Kammern vorhanden sind.

4. Vorrichtung nach Anspruch 1, 2 oder 3, wobei die Elektroden Titanelektroden umfassen.

5. Vorrichtung nach Anspruch 4, wobei wenigstens einige der Elektroden eine Überzugsschicht aus Tantal/Iridium oder Ruthenium/Iridium oder Platin oder Platin/Iridium umfassen.

6. Vorrichtung nach Anspruch 4 oder 5, wobei wenigstens einige der Elektroden eine Überzugsschicht aus Ruthenium/Iridium oder Platin umfassen.

7. Verfahren zur Elektrizitätserzeugung mit einem umgekehrten Elektrodialyseprozess (2), das die Folgenden Schritte umfasst:
- Bereitstellen einer Vorrichtung gemäß einem oder mehreren der Ansprüche 1 bis 7;
- Umschalten der Vorrichtung von einem ersten elektrizitätserzeugenden Modus in einen zweiten elektrizitätserzeugenden Modus;
- Erzeugen von Elektrizität; und
- Umschalten der Vorrichtung zurück vom zweiten elektrizitätserzeugenden Modus in den ersten elektrizitätserzeugenden Modus, unter Verwendung des Umschaltelements.

8. Verfahren nach Anspruch 7, wobei das Reinigen der Elektrode in Form einer Kathode, die im relevanten Modus nicht verbunden ist, durch die Realisierung eines pH-Werts in der unmittelbaren Umgebung der Kathode von weniger als 7 und vorzugsweise von weniger als 3 realisiert wird.

9. Verfahren nach Anspruch 7 oder 8, wobei für eine Zeitspanne nach dem Umschalten eine niedrigere Fließgeschwindigkeit des Elektrolyten realisiert wird, um eine schnellere Abnahme des pH-Werts in der Elektrolytkammer mit der verbundenen Elektrode in Form einer Anode zu bewirken.

10. Verfahren nach Anspruch 7, 8 oder 9, wobei für eine Zeitspanne nach dem Umschalten eine höhere Geschwindigkeit des Elektrolyten realisiert wird, um eine Zunahme des pH-Werts in der Elektrolytkammer mit der verbundenen Elektrode in Form einer Kathode zu verhindern.

11. Verfahren nach einem der Ansprüche 7 bis 10, wobei eine Periodendauer zwischen zwei aufeinanderfolgenden Umschaltzeitpunkten zwischen 1 und 168 Stunden angewendet wird, vorzugsweise zwischen 12 und 72 Stunden und am bevorzugtesten von etwa 24 Stunden.

## Revendications

1. Dispositif pour effectuer des processus électrochimiques, tels que dans un processus d'électrodialyse inverse, comprenant :
- un premier compartiment pourvu d'une première électrode (4) ;
- un deuxième compartiment séparé du premier compartiment et pourvu d'une première électrode (6) ;
- au moins une membrane d'échange de cations (10) et une membrane d'échange d'anions (8), qui sont placées alternativement entre les premier et deuxième compartiments, dans lequel, entre les membranes d'échange de cations et d'anions, des compartiments d'électrolyte sont formés, dans lesquels il y a une solution d'électrolyte faiblement osmotique avec de faibles concentrations d'ions et une solution d'électrolyte fortement osmotique avec des concentrations d'ions supérieures à celles des solutions d'électrolyte faiblement osmotiques, lesquelles solutions d'électrolyte fortement osmotique et faiblement osmotique sont placées alternativement dans les compartiments d'électrolyte,
**caractérisé en ce que** :
- les premier et deuxième compartiments sont pourvus d'au moins une deuxième électrode (22, 24) ; et
- un élément de commutation (28) pour commuter entre un premier mode, dans lequel la première électrode du premier compartiment et la première électrode du deuxième compartiment sont mutuellement connectées et dans lequel les deuxièmes électrodes dans les compartiments sont séparées, et un deuxième mode, dans lequel la deuxième électrode du premier compartiment et la deuxième électrode du deuxième compartiment sont mutuellement connectées et les premières électrodes dans les compartiments sont séparées, et dans lequel les solutions d'électrolyte fortement et faiblement osmotiques changent de position pendant la commutation du premier vers le deuxième mode de génération d'électricité.

2. Dispositif selon la revendication 1, dans lequel une pluralité de premiers et/ou deuxièmes compartiments sont prévus.

3. Dispositif selon la revendication 1 ou 2, dans lequel une pluralité de premières et/ou deuxièmes électrodes sont prévues dans au moins certains des compartiments.

4. Dispositif selon la revendication 1, 2 ou 3, dans lequel les électrodes comprennent des électrodes en titane.

5. Dispositif selon la revendication 4, dans lequel au moins certaines des électrodes comprennent une couche de recouvrement de tantale/iridium ou de ruthénium/iridium ou de platine ou de platine/iridium.

6. Dispositif selon la revendication 4 ou 5, dans lequel au moins certaines des électrodes comprennent une couche de recouvrement de ruthénium/iridium ou de platine.

7. Procédé de génération d'électricité par un processus d'électrodialyse inverse (2), comprenant les étapes de :
- fourniture d'un dispositif selon une ou plusieurs des revendications 1 à 7 ;
- commutation du dispositif d'un premier mode de génération d'électricité vers un deuxième mode de génération d'électricité ;
- génération d'électricité ; et
- commutation du dispositif de nouveau du deuxième mode de génération d'électricité vers le premier mode de génération d'électricité en utilisant l'élément de commutation.

8. Procédé selon la revendication 7, dans lequel le nettoyage de l'électrode sous la forme d'une cathode non connectée dans le mode pertinent est effectué par l'obtention d'un pH dans le voisinage immédiat de la cathode inférieur à 7 et de préférence inférieur à 3.

9. Procédé selon la revendication 7 ou 8, dans lequel une vitesse d'écoulement plus faible de l'électrolyte est obtenue pendant un temps après la commutation afin de provoquer une diminution plus rapide du pH dans le compartiment d'électrolyte avec l'électrode connectée sous la forme d'une anode.

10. Procédé selon la revendication 7, 8 ou 9, dans lequel une vitesse plus élevée de l'électrolyte est obtenue pendant un temps après la commutation en empêchant une augmentation du pH dans le compartiment d'électrolyte avec l'électrode connectée sous la forme d'une cathode.

11. Procédé selon une ou plusieurs des revendications 7 à 10, dans lequel une période de temps entre 1 et 168 heures, de préférence entre 12 et 72 heures, et plus préférablement d'environ 24 heures est appliquée entre deux instants de commutation successifs.
